# EUROPEAN PATENT SPECIFICATION

(11) **EP 4 322 363 B1**
(45) Date of publication and mention of the grant of the patent: **22.07.2026**
(21) Application number: 21935579.9
(22) Date of filing: 09.04.2021
(51) Int. Cl.: H02J 50/80, H04W 4/06, H02J 7/02

(54) **CAPABILITY OBTAINING METHOD AND APPARATUS, CONFIGURATION SENDING METHOD AND APPARATUS, AND CAPABILITY RECEIVING METHOD AND APPARATUS**
VERFAHREN UND VORRICHTUNG ZUM ERHALTEN VON FÄHIGKEITEN, VERFAHREN UND VORRICHTUNG ZUM SENDEN VON KONFIGURATIONEN UND VERFAHREN UND VORRICHTUNG ZUM EMPFANGEN VON KAPAZITÄTEN
PROCÉDÉ ET APPAREIL D'OBTENTION DE CAPACITÉ, PROCÉDÉ ET APPAREIL D'ENVOI DE CONFIGURATION, ET PROCÉDÉ ET APPAREIL DE RÉCEPTION DE CAPACITÉ

(43) Date of publication of application: 14.02.2024
(73) Proprietor: Beijing Xiaomi Mobile Software Co., Ltd., Beijing 100085 (CN)
(72) Inventor: HONG, Wei, Beijing 100085 (CN)
(74) Representative: dompatent
(86) International application number: PCT/CN2021/086115
(87) International publication number: WO 2022/213350

(56) References cited:
- CN-A- 103 167 588
- CN-A- 104 967 155
- CN-A- 110 169 090
- US-A1- 2014 194 092
- US-A1- 2015 022 008
- US-A1- 2015 326 058
- US-A1- 2021 013 750
- US-B1- 9 972 037

## Description

### TECHNICAL FIELD

The present invention relates to the field of communication technologies, and in particular to capability obtaining methods, configuration sending methods, capability receiving methods, and communication apparatuses.

### BACKGROUND

With the development of cellular mobile communication technologies, especially millimeter wave communication technologies, more and more antennas can be configured in a base station. For example, the achievement of a massive multiple-input multiple-output (Massive MIMO) technology in 5G has to rely on a great number of antennas. On the basis of the great number of antennas, some but not all base stations can also provide wireless charging services for terminals.

US20140194092A1 discloses wireless charging for battery-operated electronic devices (14) including both mobile and fixed battery-operated devices. A wireless charging system, based on any suitable wireless charging technology(ies), allows easy access/discovery, registration, authorization, monitoring, and/or compensation for charging services. The technology uses donor mobile radio nodes (12) that register as potential charging stations for requesting radio nodes (14). The donor and requesting nodes negotiate the charging event, and in a preferred example embodiment, payment by the requester for the charging service to donor is arranged.

US9972037B discloses systems and methods for providing wireless charging via radiofrequency (RF) carrier wave. The system can enable user equipment (UE) to charge wirelessly using RF waves when the UE is not it use. The system can activate wireless charging based in part on the battery level of the UE. The system can also initiate wireless charging when the UE is sufficiently idle (e.g., not being used for a call or web browsing). The system can also ensure that the signal strength of the carrier waves at the UE is sufficiently strong to support wireless charging. One or more system components can ensure that the threshold charge level, threshold signal strength, and threshold utilization rate are met and that the UE is authorized for wireless charging on the network. Wireless charging may be billed to the user according to usage (e.g., kWh), at a flat rate, or per instance.

US20150022008A1 discloses a wireless power system which may be used to provide wireless power transmission (WPT) while using suitable WPT techniques such as pocket-forming. Wireless power system may include a single base station which may be connected to several transmitters. Base station may manage operation of every transmitter in an independently manner or may operate them as a single transmitter. Connection between base station and transmitters may be achieved through a plurality of techniques including wired connections and wireless connections. In some embodiments, transmitters may include one or more antennas connected to at least one radio frequency integrated circuit (RFIC). Base station may include at least one microcontroller and a power source. In other embodiments, transmitters may include a plurality of antennas, a plurality of RFIC or a plurality of controllers. In addition, transmitters may include communications components which may allow for communication to various electronic equipment including phones, computers and others.

### SUMMARY

In view of the above, examples of the present invention provide capability obtaining methods, configuration sending methods, capability receiving methods and communication apparatuses, so as to solve technology problems in the related art.

The present invention is set out in the appended set of claims.

According to the examples of the present invention, the terminal in a disconnected state obtains capability information of a second base station for wireless charging in accordance with a configuration from a first base station, so as to determine a wireless charging capability of the second base station.

It facilitates the terminal to send the obtained capability information to a third base station when subsequently establishing a connection with the third base station.

On one hand, in the case where the terminal accessing the third base station requires wireless charging, the third base station selects for the terminal a base station with suitable wireless charging capability based on the capability information of the second base station to charge the terminal. For example, the third base station can instruct the terminal to switch to the second base station with corresponding wireless charging capability based on a wireless charging capability requirement of the terminal.

On the other hand, the third base station further reports the capability information to a core network and/or a network management system, so that the core network and the network management system manage the wireless charging capability of the second base station.

### BRIEF DESCRIPTION OF THE DRAWINGS

The drawings related to the description of the examples will be briefly introduced to explain the technical solutions provided by examples of the present invention more clearly. It is obvious that, the drawings in the following description illustrate only some examples of the present invention, and based on these drawings, those of ordinary skill in the art may obtain other drawings without creative work.
FIG. 1 illustrates a schematic flowchart of a capability obtaining method according to the present invention.
FIG. 2 illustrates a schematic flowchart of another capability obtaining method according to the present invention.
FIG. 3 illustrates a schematic flowchart of another capability obtaining method according to an example of the present invention.
FIG. 4 illustrates a schematic flowchart of another capability obtaining method according to an example of the present invention.
FIG. 5 illustrates a schematic flowchart of another capability obtaining method according to an example of the present invention.
FIG. 6 illustrates a schematic flowchart of another capability obtaining method according to an example of the present invention.
FIG. 7 illustrates a schematic flowchart of a configuration sending method according to the present invention.
FIG. 8 illustrates a schematic flowchart of another configuration sending method according to an example of the present invention.
FIG. 9 illustrates a schematic flowchart of another configuration sending method according to an example of the present invention.
FIG. 10 illustrates a schematic flowchart of another configuration sending method according to an example of the present invention.
FIG. 11 illustrates a schematic flowchart of a capability receiving method according to the present invention.
FIG. 12 illustrates a schematic block diagram of a capability obtaining apparatus according to an example not claimed in the present invention.
FIG. 13 illustrates a schematic block diagram of another capability obtaining apparatus according to an example not claimed in the present invention.
FIG. 14 illustrates a schematic block diagram of another capability obtaining apparatus according to an example not claimed in the present invention.
FIG. 15 illustrates a schematic block diagram of another capability obtaining apparatus according to an example not claimed in the present invention.
FIG. 16 illustrates a schematic block diagram of a configuration sending apparatus according to an example not claimed in the present invention.
FIG. 17 illustrates a schematic block diagram of another configuration sending apparatus according to an example not claimed in the present invention.
FIG. 18 illustrates a schematic block diagram of another configuration sending apparatus according to an example not claimed in the present invention.
FIG. 19 illustrates a schematic block diagram of a capability receiving apparatus according to an example not claimed in the present invention.
FIG. 20 illustrates a schematic block diagram of another capability receiving apparatus according to an example not claimed in the present invention.
FIG. 21 illustrates a schematic block diagram of an apparatus for configuration sending according to an example of the present invention.
FIG. 22 illustrates a schematic block diagram of an apparatus for capability obtaining according to an example of the present invention.

### DETAILED DESCRIPTION OF THE EMBODIMENTS

The following, in conjunction with the drawings of the examples of the present invention, will clearly and completely describe the technical solutions provided in the examples of the present invention. It is obvious that the described examples are a part, but not all, of the examples of the present invention. Based on the examples provided in the present invention, all of other examples, which can be obtained by those of ordinary skill in the art without creative work, shall fall within the protection scope of the present invention.

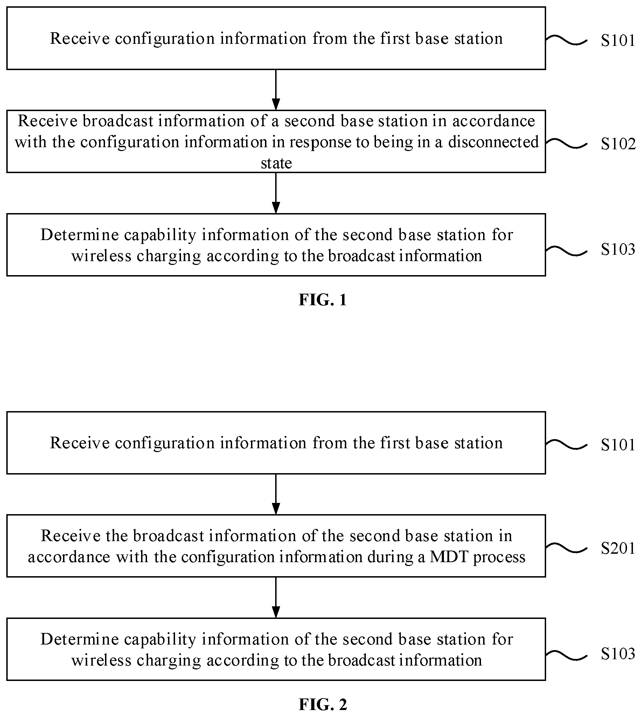

FIG. 1 illustrates a schematic flowchart of a capability obtaining method according to the present invention. The capability obtaining method illustrated is applicable to a terminal. The terminal includes but not limited to a communication apparatus such as a mobile phone, a tablet computer, a wearable device, a sensor, and an Internet of Things (IoT) device. The terminal may act as user equipment to communicate with base stations. The base stations include but not limited to base stations in a communication system, such as 4G base stations, 5G base stations and 6G base stations.

The base stations includes a first base station to which a configuration sending method described in the subsequent is applicable.

As illustrated in FIG. 1, the capability obtaining method includes the following steps.

At step S101, configuration information is received from the first base station.

At step S102, broadcast information of a second base station is received in accordance with the configuration information in response to being in a disconnected state.

At step S103, capability information of the second base station for wireless charging is determined according to the broadcast information.

It should be noted that the disconnected state in all examples of the present invention includes but not limited to an idle state and an inactive state. The capability information may include not only a specific charging capability, but also an identifier of the second base station.

The first base station sends the configuration information to the terminal. The configuration information may include a configuration, such as time domain resources, frequency domain resources, a period, a duration, etc. When being in the disconnected state, the terminal receives the broadcast information of the second base station in accordance with the configuration information, for example the configuration in the configuration information.

The second base station is other than the first base station. There may be one or more second base stations. For example, the second base stations may be base station(s) through which the terminal passes along a movement path. The terminal may receive information broadcast by the second base station when being within a signal coverage of the second base station.

The second base station broadcasts its capability information for wireless charging, so that the terminal receives the broadcast information of the second base station even if it is in the disconnected state. Thus, the terminal obtains the capability information of the second base station for wireless charging from the broadcast information and then determines the wireless charging capability of the second base station.

In an example, besides broadcasting its own capability information for wireless charging, the second base station may also communicate with neighboring base stations thereof, then obtain the capability information of the neighboring base stations for wireless charging, and thereby carry the capability information of the neighboring base stations for wireless charging in the broadcast information for broadcast.

According to the examples of the present invention, the terminal in the disconnected state may obtain the capability information of the second base station for wireless charging in accordance with the configuration of the first base station, thereby determining the wireless charging capability of the second base station.

It facilitates the terminal to send the obtained capability information to a third base station (which may be the first base station, or may be another base station) when subsequently establishing a connection with the third base station (for example, when residing in the third base station or entering a connection state with the third base station).

On one hand, in the case where the terminal accessing (residing or connecting) the third base station requires wireless charging, the third base station selects for the terminal a base station with suitable wireless charging capability based on the capability information of the second base station to charge the terminal. For example, the third base station can instruct the terminal to switch to the second base station with corresponding wireless charging capability based on a wireless charging capability requirement of the terminal.

On the other hand, the third base station further reports the capability information to a core network and/or a network management system (also called an operation administration and maintenance (OAM) system), so that the core network and the network management system manage the wireless charging capability of the second base station.

It takes the core network as an example. For example, in the case where the second base station is determined not to support the wireless charging capability according to the capability information, the second base station may be upgraded, in a software aspect or in a hardware aspect, so that the second base station can support wireless charging. For example, in the case where specific wireless charging parameters of the second base station are determined according to the capability information, the wireless charging parameters of the second base station may be adjusted to be standardized.

In some examples, the capability information includes at least one of the following:
a support for wireless charging;
a non-support for wireless charging; or
one or more wireless charging parameters.

In some examples, the one or more wireless charging parameters include at least one of the following:
a wireless charging power, a wireless charging frequency, or a wireless charging duration.

In an example, the wireless charging power refers to a charging power supported by the base station that is wirelessly charging the terminal. The wireless charging power may include one or more powers, that is, the base station may charge the terminal in accordance with only one power, or charge the terminal by selecting a power suitable for the terminal from a plurality of supported charging powers based on a charging power required by the terminal.

In an example, the wireless charging frequency refers to a charging frequency supported by the base station that is wirelessly charging the terminal. The charging frequency may be the same as or different from a frequency adopted in the communication between the base station and the terminal. The wireless charging frequency may include one or more frequencies, that is, the base station may charge the terminal at only one frequency, or charge the terminal by selecting a frequency suitable for the terminal from a plurality of charging frequencies based on frequencies supported by the terminal.

In an example, the wireless charging duration refers to a maximum duration that the base station can charge the terminal each time. The base station may determine the duration based on its own load. For example, the load is negative interrelated to the duration, that is, the higher the load, the shorter the charging duration for the terminal, and the lower the load, the longer the charging time for the terminal.

In an example, in the case where the base station supports wireless charging, a specific wireless charging configuration may also be carried in the capability information. The terminal may determine the wireless charging configuration of the base station according to the capability information, and then, may be charged in accordance to the determined wireless charging configuration when subsequently receiving radio frequency signals of the base station for charging. For example, the terminal may select a frequency corresponding to the wireless charging frequency to receive the radio frequency signals sent by the base station for charging.

It should be noted that the wireless charging parameters include but not limited to the three parameters in the above examples. Other parameters, such as a wireless charging interval, may also be set as required.

FIG. 2 illustrates a schematic flowchart of another capability obtaining method according to the present invention. As illustrated in FIG. 2, the configuration information is minimization of drive tests (MDT for short) configuration information. Receiving the broadcast information of the second base station in accordance with the configuration information includes the following step.

At step S201, the broadcast information of the second base station is received in accordance with the configuration information during an MDT process.

In an example, through the MDT configuration information, the base station may instruct the terminal to receive a configuration of the broadcast information of the second base station. The terminal may receive the broadcast information of the second base station in accordance with the configuration during the MDT process.

That is, in the MDT process, the terminal not only measures the second base station, for example a signal quality of the second base station, but also obtains the capability information of the second base station. Therefore, after the MDT is completed, the terminal not only obtains the measurement results of the base stations along its path, but also can obtain the capability information of the base stations along the path on solving a multi- subscriber identity module (SIM) problem, so as to expand the functions of the terminal in the disconnected state.

In an example, the MDT may include two types, one is Logged MDT, and the other is Immediate MDT. The Logged MDT is mainly described as an example in the follows.

In an example, the configuration information may be carried in *LoggedMeasurementConfiguration* signaling that indicates the configuration of the MDT. In particular, for example, it may be shown as follows:

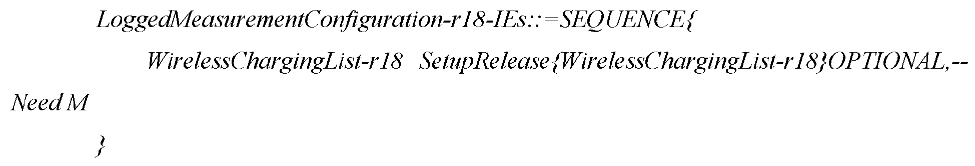

It indicates that the configuration information is specifically indicated by the information element *WirelessChargingList-r18* in the signaling. After receiving the above signaling, the terminal extracts the information element *WirelessChargingList-r18* from the signaling, and then determines the configuration for receiving the broadcast information of the second base station in accordance with the information element *WirelessChargingList-r18.*

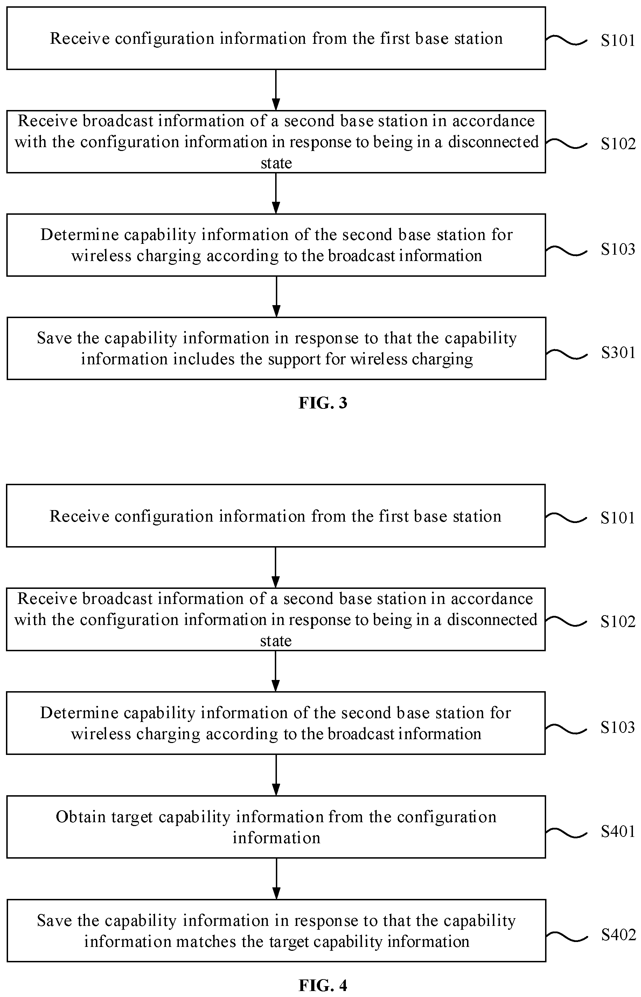

FIG. 3 illustrates a schematic flowchart of another capability obtaining method according to an example of the present invention. As illustrated in FIG. 3, in an example, the method further includes the following step.

At step S301, the capability information is saved (recorded as also called) in response to that the capability information includes the support for wireless charging.

In an example, the capability information of the second base station may be mainly classified into two types: the support for wireless charging and the non-support for wireless charging. When the second base station does not support wireless charging, the capability information may be not saved since the capability information, even if being saved, is difficult to be used by other base stations. The capability information of the second base station may be saved only when the second base station supports wireless charging, which is beneficial to avoid wasting storage space.

It should be noted that the capability information may be saved only when the capability information includes the non-support for wireless charging, as required. The reason is that the capability information is not required to be saved if the core network or the network management system configures the second base station to support wireless charging based on the capability information subsequently and thus the second base station supporting wireless charging does not need to be further configured.

Specifically, it may select according to an actual situation to save the capability information of the second base station that supports wireless charging, save the capability information of the second base station that does not support wireless charging, or save the capability information of the second base station in both cases, which may be, for example, determined according to the configuration information, or agreed by a protocol, or determined according to non-access stratum information.

FIG. 4 illustrates a schematic flowchart of another capability obtaining method according to an example of the present invention. As illustrated in FIG. 4, in an example, the method further includes the following steps.

At step S401, target capability information is obtained from the configuration information.

At step S402, the capability information is saved in response to that the capability information matches the target capability information.

In an example, the first base station may indicate the target capability information to the terminal through the configuration information, so that the terminal may save the capability information only when the capability information of the second base station matches the target capability information, which improves a capability that the first base station controls the terminal to save the capability information.

The target capability information may be a support for wireless charging capability, a non-support for wireless charging capability, or specific wireless charging paramete(s.

In an example, the wireless charging parameters in the target capability information may be wireless charging parameters not supported by the first base station. The first base station may determine the wireless charging parameters supported by itself, send to the terminal by carrying them in the configuration information, and indicate the terminal to save the capability information only when the received capability information is different from the wireless charging parameters in the configuration information.

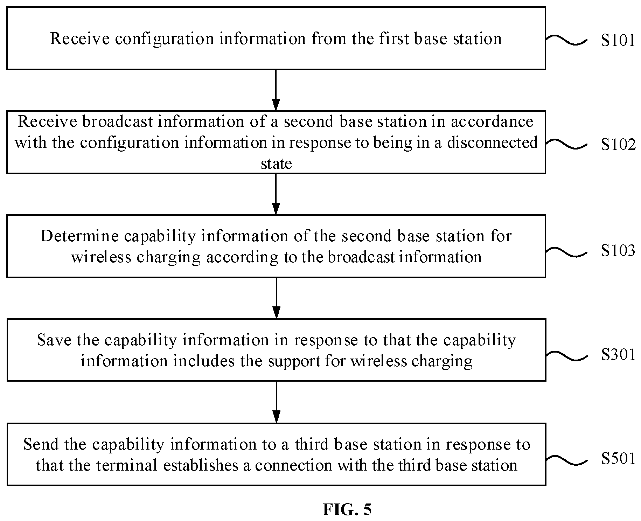

FIG. 5 illustrates a schematic flowchart of another capability obtaining method according to an example of the present invention. As illustrated in FIG. 5, in an example, the method further includes the following step.

At step S501, the capability information is sent to a third base station in response to that the terminal establishes a connection with the third base station.

In an example, after establishing the connection with the third base station, the terminal may send the capability information of the second base station on solving the multi-SIM problem to the third base station, so that the third base station may determine the capability of the second base station on solving the multi-SIM problem, which facilitates the coordination between the third base station and the second base station to more effectively solve the multi-SIM problem for the terminal.

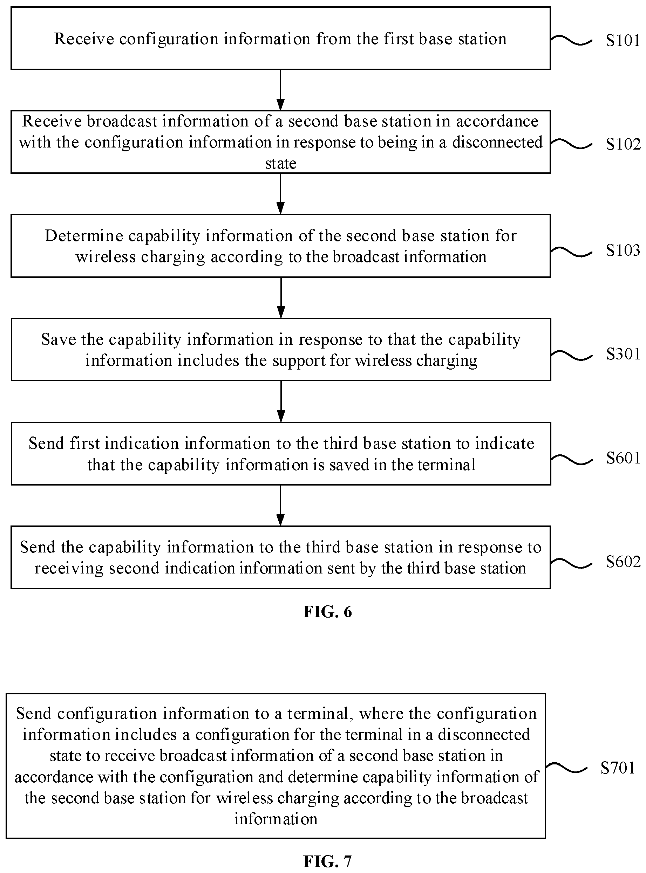

FIG. 6 illustrates a schematic flowchart of another capability obtaining method according to an example of the present invention. As illustrated in FIG. 6, in an example, sending the capability information to the third base station includes the following steps.

At step S601, first indication information is sent to the third base station to indicate that the capability information is saved in the terminal.

At step S602, the capability information is sent to the third base station in response to receiving second indication information sent by the third base station.

In an example, in the case where the second base station supports wireless charging, the capability information is sent to the third base station in response to receiving the second indication information sent by the third base station.

In an example, the first indication information is sent to the third base station if the second base station supports wireless charging, that is, the terminal sends the first indication information to the third base station only when determining that the second base station supports wireless charging. The first indication information may not be sent to the third base station if the second base station is determined not to support wireless charging.

In an example, during or after a process of establishing a connection with the third base station, the terminal may send the first indication information to the third base station to inform the third base station that the capability information of the second base station is saved in the terminal.

For example, the terminal sends the first indication information to the third base station during the process of connecting with the third base station. For a 4G network, the first indication information may be carried in at least one of the following radio resource control (RRC) signaling:
RRC connection setup complete signaling (*RRCConnectionSetupComplete*);
RRC connection reconfiguration complete signaling *(RRCConnectionReconfigurationComplete);*
RRC connection re-establishment complete signaling (*RRCConnectionReestablishmentComplete*); or
RRC connection resume complete signaling (*RRCConnectionResumeComplete*).

For a 5G network, the first indication information may be carried in at least one of the following RRC signaling:
RRC setup complete signaling (*RRCSetupComplete*);
RRC reconfiguration complete signaling (*RRCReconfigurationComplete*);
RRC re-establishment complete signaling (*RRCReestablishmentComplete*); or
RRC resume complete signaling (*RRCResumeComplete*).

In an example, after receiving the first indication information, the third base station may determine whether to obtain the capability information of the second base station saved in the terminal, as required. If it is determined that the capability information is expected to be obtained, the second indication information may be sent to the terminal to instruct the terminal to send the saved capability information to the third base station. Furthermore, after receiving the second indication information, the terminal may sent the saved capability information to the third base station.

For example, the third base station may carry the second indication information in *UEInformationRequest*, i.e., user equipment information request signaling. Correspondingly, the terminal may carry the capability information in *UEInformationResponse*, i.e., user equipment information response signaling.

FIG. 7 illustrates a schematic flowchart of a configuration sending method according to the present invention. The configuration sending method illustrated in this example is applicable to a first base station. The first base station includes but not limited to a 4G base station, a 5G base station, and a 6G base station. The first base station may communicate with a terminal acting as user equipment. The terminal includes but not limited to a communication apparatus such as a mobile phone, a tablet computer, a wearable device, a sensor, and an IoT device.

The terminal may be a terminal to which the capability obtaining method described in the present invention is applicable.

As illustrated in FIG. 7, the configuration sending method includes the following step.

At step S701, configuration information is sent to a terminal. The configuration information includes a configuration for the terminal in a disconnected state to receive broadcast information of a second base station in accordance with the configuration and determine capability information of the second base station for wireless charging according to the broadcast information.

The first base station sends the configuration information to the terminal. The configuration information includes a configuration, such as time domain resources, frequency domain resources, a period, a duration, etc. When being in the disconnected state, the terminal receives the broadcast information of the second base station in accordance with the configuration information, i.e., the configuration in the configuration information.

The second base station is other than the first base station. There may be one or more second base stations. For example, the second base stations may be base station(s) through which the terminal passes along a movement path. The terminal may receive information broadcast by the second base station when being within a signal coverage of the second base station.

The second base station broadcasts its capability information for wireless charging, so that the terminal receives the broadcast information of the second base station even if it is in the disconnected state. Thus, the terminal obtains the capability information of the second base station for wireless charging from the broadcast information and then determines the wireless charging capability of the second base station.

In an example, besides broadcasting its own capability information for wireless charging, the second base station may also communicate with neighboring base stations thereof, then obtain the capability information of the neighboring base stations for wireless charging, and thereby carry the capability information of the neighboring base stations for wireless charging in the broadcast information for broadcast.

According to the present invention, the terminal in the disconnected state obtains the capability information of the second base station for wireless charging in accordance with the configuration of the first base station, thereby determining the wireless charging capability of the second base station.

It facilitates the terminal to send the obtained capability information to a third base station (which may be the first base station, or may be another base station) when subsequently establishing a connection with the third base station (for example, when residing in the third base station or entering a connection state with the third base station).

On one hand, in the case where the terminal accessing (residing or connecting) the third base station requires wireless charging, the third base station selects for the terminal a base station with suitable wireless charging capability based on the capability information of the second base station to charge the terminal. For example, the third base station can instruct the terminal to switch to the second base station with corresponding wireless charging capability based on a wireless charging capability requirement of the terminal.

On the other hand, the third base station further reports the capability information to a core network and/or a network management system (also called an OAM system), so that the core network and the network management system manage the wireless charging capability of the second base station.

It takes the core network as an example. For example, in the case where the second base station is determined not to support the wireless charging capability according to the capability information, the second base station may be upgraded, in a software aspect or in a hardware aspect, so that the second base station can support wireless charging. For example, in the case where specific wireless charging parameters of the second base station are determined according to the capability information, the wireless charging parameters of the second base station may be adjusted to be standardized.

The configuration information is MDT configuration information. In this case, the terminal receives broadcast information of the second base station in accordance with the configuration information during an MDT process.

Through the MDT configuration information, the base station instructs the terminal to receive a configuration of the broadcast information of the second base station. The terminal receives the broadcast information of the second base station in accordance with the configuration during the MDT process.

That is, in the MDT process, the terminal not only measures the second base station, for example a signal quality of the second base station, but also obtains the capability information of the second base station. Therefore, after the MDT is completed, the terminal not only obtains the measurement results of the base stations along its path, but also can obtain the capability information of the base stations along the path on solving a multi-SIM problem, so as to expand the functions of the terminal in the disconnected state.

In an example, the MDT may include two types, one is Logged MDT, and the other is Immediate MDT. The Logged MDT is mainly described as an example in the follows.

In an example, the configuration information may be carried in *LoggedMeasurementConfiguration* signaling that indicates the configuration of the MDT. In particular, for example, it may be shown as follows:

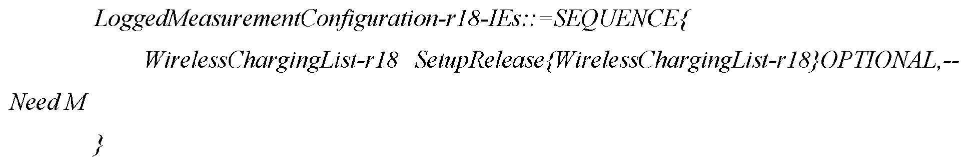

It indicates that the configuration information is specifically indicated by the information element *WirelessChargingList-r18* in the signaling. After receiving the above signaling, the terminal extracts the information element *WirelessChargingList-r18* from the signaling, and then determines the configuration for receiving the broadcast information of the second base station in accordance with the information element *WirelessChargingList-r18.*

In an example, the configuration information further includes target capability information for the terminal to save the capability information when the capability information matches the target capability information.

In an example, the first base station may indicate the target capability information to the terminal through the configuration information, so that the terminal may save the capability information only when the capability information of the second base station matches the target capability information, which improves a capability that the first base station controls the terminal to save the capability information.

The target capability information may be a support for wireless charging capability, a non-support for wireless charging capability, or specific wireless charging parameters.

In an example, the wireless charging parameters in the target capability information may be wireless charging parameters not supported by the first base station. The first base station may determine the wireless charging parameters supported by itself, send to the terminal by carrying them in the configuration information, and indicate the terminal to save the capability information only when the received capability information is different from the wireless charging parameters in the configuration information.

In an example, the capability information includes at least one of the following:
a support for wireless charging;
a non-support for wireless charging; or
one or more wireless charging parameters.

In an example, the one or more wireless charging parameters include at least one of the following:
a wireless charging power, a wireless charging frequency, or a wireless charging duration.

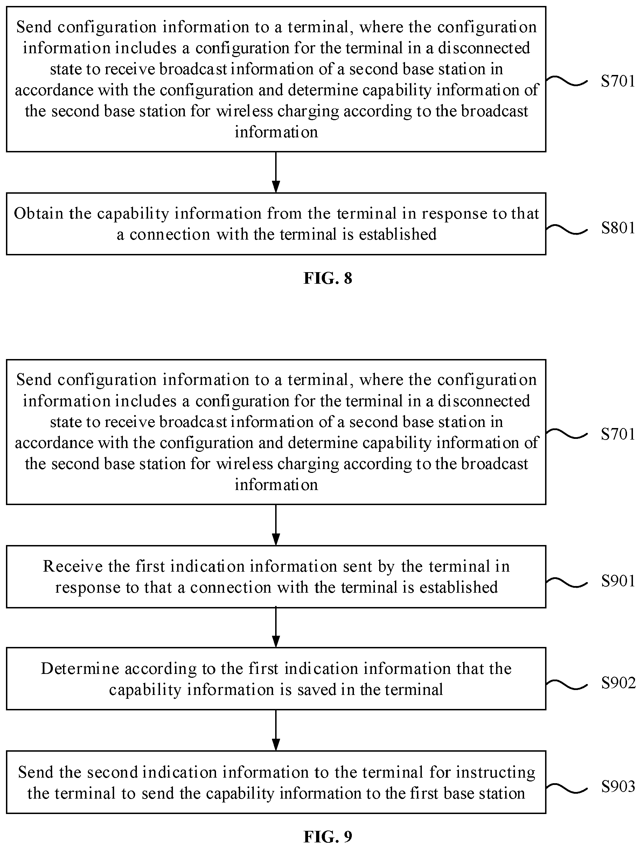

FIG. 8 illustrates a schematic flowchart of another configuration sending method according to an example of the present invention. As illustrated in FIG. 8, the method further includes the following step.

At step S801, the capability information is obtained from the terminal in response to that a connection with the terminal is established.

In an example, the first base station may obtain the capability information from the terminal after the connection is established with the terminal. For example, the terminal may automatically send the capability information of the second base station on solving a multi-SIM problem to the first base station, or the terminal may send the capability information of the second base station on solving the multi-SIM problem to the first base station after the first base station makes a request. Thus, the first base station may determine the capability of the second base station on solving the multi-SIM problem, which facilitates a cooperation between the first base station and the second base station to more effectively solve the multi-SIM problem for the terminal.

FIG. 9 illustrates a schematic flowchart of another configuration sending method according to an example of the present invention. As illustrated in FIG. 9, obtaining the capability information from the terminal includes the following steps.

At step S901, the first indication information sent by the terminal is received.

At step S902, it is determined according to the first indication information that the capability information is saved in the terminal.

At step S903, the second indication information is sent to the terminal for instructing the terminal to send the capability information to the first base station.

In an example, the third base station may also determine according to the first indication information whether the second base station supports wireless charging or not, and may send the second indication information to the terminal only when the second base station supports wireless charging. The third base station may not send the second indication information to the terminal when determining that the second base station does not support wireless charging, thereby avoiding obtaining specific capability information.

In an example, during or after a process of establishing a connection with the first base station, the terminal may send the first indication information to the first base station to inform the first base station that the capability information of the second base station is saved in the terminal.

For example, the terminal sends the first indication information to the first base station during the process of connecting with the first base station. For a 4G network, the first indication information may be carried in at least one of the following RRC signaling:
RRC connection setup complete signaling (*RRCConnectionSetupComplete*);
RRC connection reconfiguration complete signaling (*RRCConnectionReconfigurationComplete*);
RRC connection re-establishment complete signaling (*RRCConnectionReestablishmentComplete*); or
RRC connection resume complete signaling (*RRCConnectionResumeComplete*)*.*

For a 5G network, the first indication information may be carried in at least one of the following RRC signaling:
RRC setup complete signaling (*RRCSetupComplete*);
RRC reconfiguration complete signaling (*RRCReconfigurationComplete*);
RRC re-establishment complete signaling (*RRCReestablishmentComplete*); or
RRC resume complete signaling (*RRCResumeComplete*)*.*

In an example, after receiving the first indication information, the first base station may determine whether to obtain the capability information of the second base station saved in the terminal, as required. If it is determined that the capability information is expected to be obtained, the second indication information may be sent to the terminal to instruct the terminal to send the saved capability information to the first base station. Furthermore, after receiving the second indication information, the terminal may sent the saved capability information to the first base station.

For example, the first base station may carry the second indication information in *UEInformationRequest*, i.e., user equipment information request signaling. Correspondingly, the terminal may carry the capability information in *UEInformationResponse*, i.e., user equipment information response signaling.

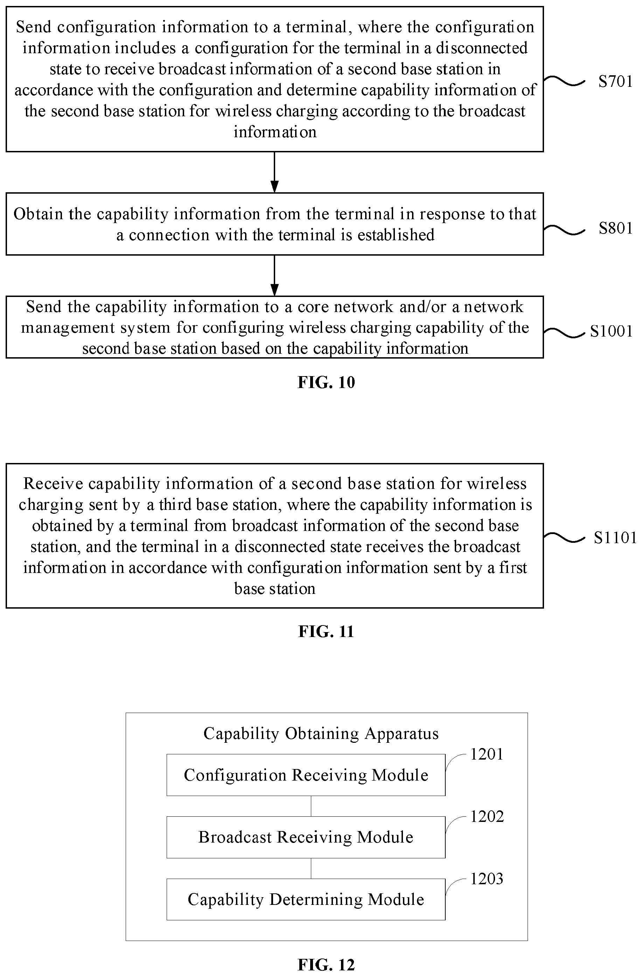

FIG. 10 illustrates a schematic flowchart of another configuration sending method according to an example of the present invention. As illustrated in FIG. 10, the method further includes the following step.

At step S1001, the capability information is sent to a core network and/or a network management system for configuring wireless charging capability of the second base station based on the capability information.

FIG. 11 illustrates a schematic flowchart of a capability receiving method according to the present invention. The capability receiving method illustrated is applicable to a core network and/or a network management system. The core network and/or the network management system may communicate with base stations. The base stations include but not limited to 4G base stations, 5G base stations, and 6G base stations. The base stations may communicate with a terminal acting as user equipment. The terminal includes but not limited to a communication apparatus such as a mobile phone, a tablet computer, a wearable device, a sensor, and an IoT device.

The base stations include a first base station to which the configuration sending method described in the present invention is applicable. The terminal is a terminal to which the capability obtaining method described in the present invention is applicable.

As illustrated in FIG. 11, the capability receiving method includes the following step.

At step S1101, capability information of a second base station for wireless charging sent by a third base station is received. The capability information is obtained by a terminal from broadcast information of the second base station, and the terminal in a disconnected state receives the broadcast information in accordance with configuration information sent by a first base station.

The first base station sends the configuration information to the terminal. The configuration information may include a configuration, such as time domain resources, frequency domain resources, a period, a duration, etc. When being in the disconnected state, the terminal receives the broadcast information of the second base station in accordance with the configuration information, for example the configuration in the configuration information.

The second base station is other than the first base station. There may be one or more second base stations. For example, the second base stations may be base station(s) through which the terminal passes along a movement path. The terminal may receive information broadcast by the second base station when being within a signal coverage of the second base station.

The second base station broadcasts its capability information for wireless charging, so that the terminal receives the broadcast information of the second base station even if it is in the disconnected state. Thus, the terminal obtains the capability information of the second base station for wireless charging from the broadcast information, and then determines the wireless charging capability of the second base station.

In an example, besides broadcasting its own capability information for wireless charging, the second base station may also communicate with neighboring base stations thereof, then obtain the capability information of the neighboring base stations for wireless charging, and thereby carry the capability information of the neighboring base stations for wireless charging in the broadcast information for broadcast.

In an example, the terminal may obtain the capability information of the second base station for wireless charging in accordance with the configuration from the first base station when being in the disconnected state, so as to determine the wireless charging capability of the second base station, and then send the capability information to the third base station. The third base station may be the first base station or another base station. For example, after the terminal resides on the third base station, the obtained capability information may be sent to the third base station. Further, the third base station may send the received capability information to the core network, and may also send the received capability information to the network management system, so that the core network and the network management system can manage the wireless charging capability of the second base station based on the capability information.

It takes the core network as an example. For example, in the case where the second base station is determined not to support the wireless charging capability according to the capability information, the second base station may be upgraded, in a software aspect or in a hardware aspect, so that the second base station can support wireless charging. For example, in the case where specific wireless charging parameters of the second base station are determined according to the capability information, the wireless charging parameters of the second base station may be adjusted to be standardized.

In an example, the capability information includes at least one of the following:
a support for wireless charging;
a non-support for wireless charging; or
one or more wireless charging parameters.

In an example, the one or more wireless charging parameters include at least one of the following:
a wireless charging power, a wireless charging frequency, or a wireless charging duration.

In an example, the method further includes:
configuring wireless charging capability of the second base station based on the capability information.

After receiving the capability information, the core network and the network management system may determine the wireless charging capability of the second base station based on the capability information, and then may configure the wireless charging capability of the second base station. For example, the wireless charging parameters of the second base station may be adjusted, so as to make the wireless charging capability of the second base station meet requirements.

The following two examples illustrate how to configure the wireless charging capability of the second base station. Here, they are described by taking the core network as an execution subject, but the network management system may also be taken as the execution subject in actual operations.

In an example, configuring the wireless charging capability of the second base station based on the capability information includes:
configuring the second base station to support wireless charging in response to determining according to the capability information that the second base station does not support wireless charging.

The core network may determine which second base stations support wireless charging and which second base stations do not support wireless charging according to the second capability information. For the second base station that does not support wireless charging, the reason why the second base station does not support wireless charging may also be determined based on the second capability information, such as software reasons, hardware reasons, and the like. With respect to the hardware reasons, the core network may not be able to solve the problem directly, and a prompt message may be generated for notification to solve the problem manually. With respect to the software reasons, the core network may directly solve the problem. For example, the software of the second base station is upgraded, so that the software of the second base station supports wireless charging.

In an example, the capability information includes wireless charging parameters, and configuring the wireless charging capability of the second base station based on the capability information includes:
adjusting one or more wireless charging parameters in response to that the one or more wireless charging parameters do not match standard charging parameters, so that one or more adjusted wireless charging parameters match the standard charging parameters.

In the case where the capability information includes the one or more wireless charging parameters, the core network may determine specific wireless charging parameters of the second base station based on the capability information of the second base station.

If different second base stations have different wireless charging parameters, the terminal has to adjust its own wireless charging parameters to be compatible with the wireless charging parameters of the second base stations when being wirelessly charged within the coverage of different second base stations. For a terminal with limited capabilities, it may not be able to adjust its own wireless charging parameters to be compatible with the wireless charging parameters of the second base station, so as to be unable to be wirelessly charged through the second base station. For the terminal that is able to adjust its own wireless charging parameters to be compatible with the wireless charging parameters of the second base station, it has to adjust its own wireless charging parameters when being located in the coverages of different second base stations, which causes unnecessary consumption of terminal resources.

According to this example, the standard charging parameters may be saved in the core network. For example, the standard charging parameters may be negotiated with multiple terminals and/or multiple base stations, or may be specified by a protocol. Therefore, the core network may compare the wireless charging parameters of the second base station with the standard charging parameters to determine whether they are matched. Being matched means that an absolute value of a difference between two parameters is less than or equal to a preset difference (which may be a value equal to or greater than 0).

Taking a wireless charging power in the wireless charging parameters as an example, a standard charging parameter is 60W, the preset difference is 5W, and the core network determines based to the capability information that the wireless charging power of the second base station A is 59W and the wireless charging power of the second base station B is 54W. Furthermore, it may be determined that the difference between the wireless charging power of the second base station A and the standard charging parameter is less than 5W, and the difference between the wireless charging power of the second base station B and the standard charging parameter is greater than 5W, that is, the wireless charging parameter of the second base station A matches the standard charging parameter, and the wireless charging parameter of the second base station B does not match the standard charging parameter. Then, the wireless charging parameter of the second base station B may be adjusted. For example, an instruction is sent to the second base station B and instructs the second base station B to adjust the wireless charging power to 60W.

Accordingly, all second base stations can be kept to perform wireless charging in accordance with the standard charging parameters. When the terminal is within the coverages of different second base stations, the wireless charging parameters for wireless charging are basically identical, so as to avoid adjusting its own wireless charging parameters. It ensures that the terminal can be wirelessly charged, and avoids a resource waste caused by adjusting its own wireless charging parameters.

Corresponding to the foregoing capability obtaining methods and the foregoing configuration sending methods, the present invention also provides communication apparatus examples.

FIG. 12 illustrates a schematic block diagram of a capability obtaining apparatus according to an example not claimed in the present invention. The capability obtaining apparatus illustrated in this example may be applicable to a terminal. The terminal is a multi- SIM terminal and the terminal includes but not limited to a communication apparatus such as a mobile phone, a tablet computer, a wearable device, a sensor, an IoT device. The terminal may act as user equipment to communicate with base stations. The base stations include but not limited to base stations in a communication system, such as 4G base stations, 5G base stations and 6G base stations.

As illustrated in FIG. 12, the capability obtaining apparatus may include:
a configuration receiving module 1201 that is configured to receive configuration information from a first base station;
a broadcast receiving module 1202 that is configured to receive, in response to being in a disconnected state, broadcast information of a second base station in accordance with the configuration information; and
a capability determining module 1203 that is configured to determine capability information of the second base station for wireless charging according to the broadcast information.

In an example, the capability information includes at least one of the following:
a support for wireless charging;
a non-support for wireless charging; or
one or more wireless charging parameters.

In an example, the one or more wireless charging parameters include at least one of the following:
a wireless charging power, a wireless charging frequency, or a wireless charging duration.

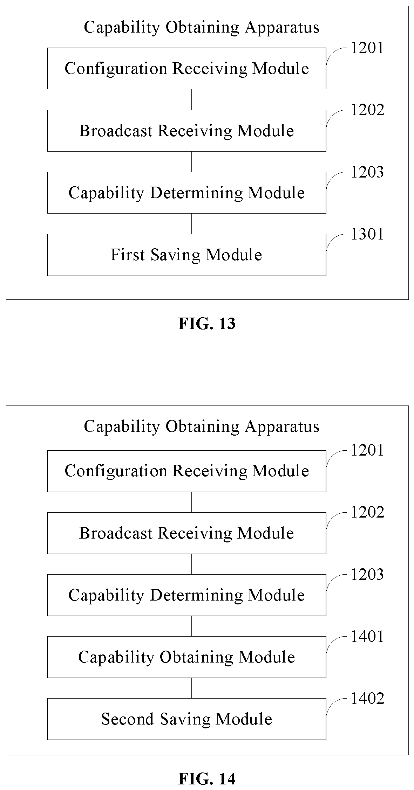

FIG. 13 illustrates a schematic block diagram of another capability obtaining apparatus according to an example the present invention. As illustrated in FIG. 13, the apparatus further includes:
a first saving module 1301 that is configured to save the capability information in response to that the capability information includes the support for wireless charging.

FIG. 14 illustrates a schematic block diagram of another capability obtaining apparatus according to an example the present invention. As illustrated in FIG. 14, the apparatus further includes:
a capability obtaining module 1401 that is configured to obtain target capability information from the configuration information; and
a second saving module 1402 that is configured to save the capability information in response to that the capability information matches the target capability information.

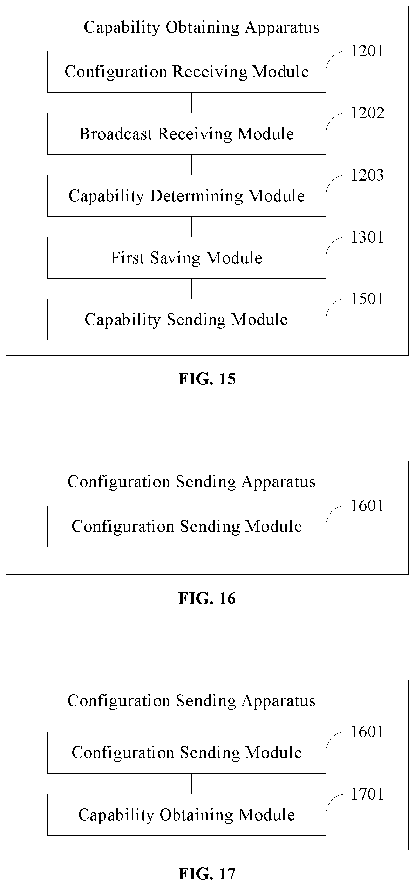

FIG. 15 illustrates a schematic block diagram of another capability obtaining apparatus according to an example the present invention. As illustrated in FIG. 15, the apparatus further includes:
a capability sending module 1501 that is configured to send the capability information to a third base station in response to that the terminal establishes a connection with the third base station.

In an example, the capability sending module is configured to send first indication information to the third base station to indicate that the capability information is saved in the terminal, and send the capability information to the third base station in response to that second indication information sent by the third base station is received.

In an example, the broadcast receiving module is configured to receive, during an MDT process, the broadcast information of the second base station in accordance with the configuration information

FIG. 16 illustrates a schematic block diagram of a configuration sending apparatus according to an example the present invention. The configuration sending apparatus illustrated in this example may be applicable to a first base station. The first base station includes but not limited to a 4G base station, a 5G base station, and a 6G base station. The first base station may communicate with a terminal acting as user equipment. The terminal includes but not limited to a communication apparatus such as a mobile phone, a tablet computer, a wearable device, a sensor, and an IoT device.

As illustrated in FIG. 16, the configuration sending apparatus may include:
a configuration sending module 1601 that is configured to send configuration information to a terminal. The configuration information includes a configuration for the terminal in a disconnected state to receive broadcast information of a second base station in accordance with the configuration and determine capability information of the second base station for wireless charging according to the broadcast information.

In an example, the configuration information further includes target capability information for the terminal to save the capability information when the capability information matches the target capability information.

In an example, the capability information includes at least one of the following:
a support for wireless charging;
a non-support for wireless charging; or
one or more wireless charging parameters.

In an example, the one or more wireless charging parameters include at least one of the following:
a wireless charging power, a wireless charging frequency, or a wireless charging duration.

FIG. 17 illustrates a schematic block diagram of another configuration sending apparatus according to an example the present invention. As illustrated in FIG. 17, the apparatus further includes:
a capability obtaining module 1701 that is configured to obtain the capability information from the terminal in response to that a connection with the terminal is established.

In an example, the capability obtaining module is configured to receive first indication information sent by the terminal; determine, according to the first indication information, that the capability information is saved in the terminal; and send second indication information to the terminal for instructing the terminal to send the capability information to the first base station.

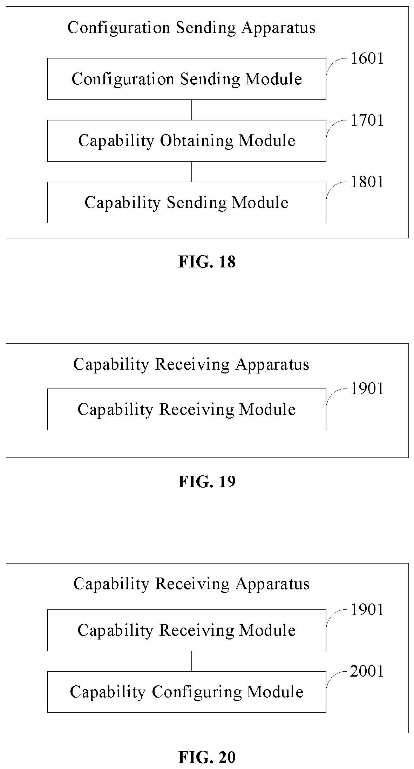

FIG. 18 illustrates a schematic block diagram of a configuration sending apparatus according to an example the present invention. As illustrated in FIG. 18, the apparatus further includes:
a capability sending module 1801 that is configured to send the capability information to a core network and/or a network management system for configuring wireless charging capability of the second base station based on the capability information.

In an example, the configuration information is MDT configuration information.

FIG. 19 illustrates a schematic block diagram of a capability receiving apparatus according to an example the present invention. The capability receiving apparatus illustrated in this example may be applicable to a core network and/or a network management system. The core network and/or the network management system may communicate with base stations. The base stations include but not limited to 4G base stations, 5G base stations, and 6G base stations. The base stations may communicate with a terminal acting as user equipment. The terminal includes but not limited to a communication apparatus such as a mobile phone, a tablet computer, a wearable device, a sensor, and an IoT device.

As illustrated in FIG. 19, the capability receiving apparatus may include:
a capability receiving module 1901 that is configured to receive capability information of a second base station for wireless charging sent by a third base station. The capability information is obtained by a terminal from broadcast information of the second base station, and the terminal in a disconnected state receives the broadcast information in accordance with configuration information sent by a first base station.

In an example, the capability information includes at least one of the following:
a support for wireless charging;
a non-support for wireless charging; or
one or more wireless charging parameters.

In an example, the one or more wireless charging parameters include at least one of the following:
a wireless charging power, a wireless charging frequency, or a wireless charging duration.

FIG. 20 illustrates a schematic block diagram of another capability receiving apparatus according to an example the present invention. As illustrated in FIG. 20, the apparatus further includes:
a capability configuring module that is configured to configure wireless charging capability of the second base station based on the capability information.

In an example, the capability configuring module is configured to configure the second base station to support wireless charging in response to determining according to the capability information that the second base station does not support wireless charging.

In an example, the capability information includes one or more wireless charging parameters. The capability configuration module is configured to adjust the one or more wireless charging parameters in response to that the one or more wireless charging parameters do not match standard charging parameters, so that one or more adjusted wireless charging parameters match the standard charging parameters.

Regarding the apparatus in the foregoing examples, the specific manner in which each module performs its operation has been described in detail in the examples of the related methods, and will not be repeated here.

Since the apparatus examples essentially correspond to the method examples, reference may be made to the description of related parts of the method examples. The apparatus examples described above are merely illustrative, in which the modules described as separate components may or may not be physically separated, and the components displayed as modules may or may not be physical modules, that is, may be located in one place or distributed to multiple modules in a network. Some or all of the modules may be selected according to actual needs to achieve the objectives of the implementations of the examples. It can be understood and implemented by those of ordinary skill in the art without any creative effort.

The present invention also provide a communication apparatus, for example a terminal, including:
one or more processors; and
one or more memories for storing a computer program.

The computer program, when executed by the one or more processors, implements any capability obtaining method described above.

The present invention also provide a communication apparatus, for example a base station, including:
one or more processors; and
one or more memories for storing a computer program.

The computer program, when executed by the one or more processors, implements any configuration sending method described above.

Examples not claimed in the present invention also provide a communication apparatus, such as a core network or a network management system, including:
one or more processors; and
one or more memories for storing a computer program.

The computer program, when executed by the one or more processors, implements any capability receiving method described above.

Examples not claimed in the present invention also provide a computer-readable storage medium, which is applicable to, for example, a terminal. The computer-readable storage medium is used for storing a computer program. The computer program, when executed by one or more processors, implements the steps of any capability obtaining method described above.

Examples not claimed in the present invention also provide a computer-readable storage medium, which is applicable to, for example, a base station. The computer-readable storage medium is used for storing a computer program. The computer program, when executed by one or more processors, implements the step(s) of any configuration sending method described above.

Examples not claimed in the present invention also provide a computer-readable storage medium, which is applicable to, for example, a core network or a network management system. The computer-readable storage medium is used for storing a computer program. The computer program, when executed by one or more processors, implements the step(s) of any capability receiving method described above.

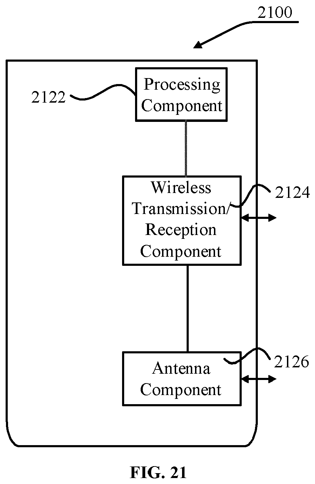

As illustrated in FIG. 21, FIG. 21 illustrates a schematic block diagram of an apparatus 2100 for configuration sending according to an example of the present invention. The apparatus 2100 may be provided as a base station. In referring to FIG. 21, the apparatus 2100 includes a processing component 2122, a wireless transmission/reception component 2124, an antenna component 2126, and a signal processing part peculiar to a wireless interface. The processing component 2122 may further include one or more processors. One of the one or more processors in the processing component 2122 may be configured to implement any configuration sending method described above.

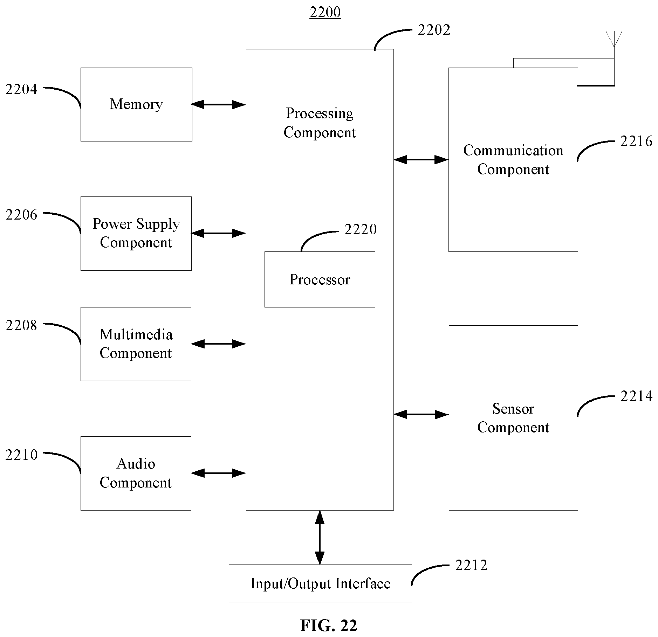

FIG. 22 illustrates a schematic block diagram of an apparatus 2200 for capability obtaining according to an example of the present invention. For example, the apparatus 2200 may be a mobile phone, a computer, a digital broadcasting user device, a messaging device, a game console, a tablet device, a medical device, a fitness device, a personal digital assistant, and the like.

In referring to FIG. 22, the apparatus 2200 may include one or more of the following components: a processing component 2202, a memory 2204, a power supply component 2206, a multimedia component 2208, an audio component 2210, an input/output (I/O) interface 2212, a sensor component 2214, and a communication component 2216.

The processing component 2202 generally controls the overall operations of the apparatus 2200, such as operations associated with display, phone calls, data communications, camera operations, and recording operations. The processing component 2202 may include one or more processors 2220 to execute instructions to complete all or a part of the steps of the foregoing capability obtaining methods. In addition, the processing component 2202 may include one or more modules which facilitate the interaction between the processing component 2202 and other components. For example, the processing component 2202 may include a multimedia module to facilitate the interaction between the multimedia component 2208 and the processing component 2202.

The memory 2204 is configured to store various types of data to support the operations of the apparatus 2200. Examples of such data include instructions for any application or method operated on the apparatus 2200, contact data, phonebook data, messages, pictures, videos, and the like. The memory 2204 may be implemented by any type of volatile or non-volatile storage device or a combination thereof, such as a static random access memory (SRAM), an electrically erasable programmable read-only memory (EEPROM), an erasable and programmable read-only memory (EPROM), a programmable read-only memory (PROM), a read-only memory (ROM), a magnetic memory, a flash memory, a magnetic disk or an optical disk.

The power supply component 2206 provides power for various components of the apparatus 2200. The power supply component 2206 may include a power management system, one or more power supplies, and other components associated with generating, managing, and distributing power for the apparatus 2200.

The multimedia component 2208 includes a screen providing an output interface between the apparatus 2200 and a user. In some examples, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense a lasting time and a pressure associated with the touch or swipe. In some examples, the multimedia component 2208 includes a front camera and/or a rear camera. The front camera and/or rear camera may receive external multimedia data when the apparatus 2200 is in an operating mode, such as a photographing mode or a video mode. Each front camera and rear camera may be a fixed optical lens system or have focal length and optical zooming capability.

The audio component 2210 is configured to output and/or input audio signals. For example, the audio component 2210 includes a microphone (MIC) that is configured to receive an external audio signal when the apparatus 2200 is in an operating mode, such as a call mode, a recording mode, and a voice recognition mode. The received audio signal may be further stored in memory 2204 or sent via communication component 2216. In some examples, the audio component 2210 also includes a speaker for outputting audio signals.

The I/O interface 2212 provides an interface between the processing component 2202 and a peripheral interface module. The above peripheral interface module may be a keyboard, a click wheel, buttons, or the like. These buttons may include but not limited to a home button, a volume button, a start button and a lock button.

The sensor component 2214 includes one or more sensors to provide the apparatus 2200 with status assessments in various aspects. For example, the sensor component 2214 may detect an open/closed state of the apparatus 2200 and a relative positioning of components such as the display and keypad of the apparatus 2200, and the sensor component 2214 can also detect a change in position of the apparatus 2200 or a component of the apparatus 2200, the presence or absence of user contact with the apparatus 2200, orientation or acceleration/deceleration of the apparatus 2200, and temperature change of the apparatus 2200. The sensor component 2214 may include a proximity sensor configured to detect the presence of a nearby object without any physical contact. The sensor component 2214 may further include an optical sensor, such as a complementary metal-oxide-semiconductor (CMOS) or charged coupled device (CCD) image sensor which is used in imaging applications. In some examples, the sensor component 2214 may also include an acceleration sensor, a gyro sensor, a magnetic sensor, a pressure sensor, or a temperature sensor.

The communication component 2216 is configured to facilitate wired or wireless communication between the apparatus 2200 and other devices. The apparatus 2200 may access a wireless network based on a communication standard, such as WiFi, 2G or 3G, 4G LTE, 5G NR, or a combination thereof. In an example, the communication component 2216 receives broadcast signals or broadcast related information from an external broadcast management system via a broadcast channel. In an example, the communication component 2216 also includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth^{®} (BT) technology and other technologies.

In one or more examples, the apparatus 2200 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the foregoing capability obtaining methods.

In one or more examples, there is also provided a non-transitory computer-readable storage medium including instructions, such as the memory 2204 including instructions. These instructions may be executed by the one or more processors 2220 of the apparatus 2200 to complete the foregoing capability obtaining methods. For example, the non-transitory computer-readable storage medium may be a read-only memory (ROM), a random access memory (RAM), a CD-ROM, a magnetic tape, a floppy disk, an optical data storage device, and the like.

Other implementations of the present invention will be readily apparent to those skilled in the art after implementing the invention by referring to the specification. The present invention is intended to cover any variations, uses, or adaptations of the present invention that are in accordance with the general principles thereof and include common general knowledge or conventional technical means in the art that are not disclosed in the present invention. The specification and examples therein are only illustrative, and the scope of the present invention is to be indicated by appended claims.

It should be understood that the present invention is not limited to the above-described accurate structures illustrated in the drawings, and various modifications and changes can be made to the present invention without departing from the scope thereof. The scope of the present invention is to be limited only by the appended claims.

It should be noted that the relational terms such as "first" and "second" used herein are merely intended to distinguish one entity or operation from another entity or operation rather than to require or imply any such actual relationship or order existing between these entities or operations. Also, the term "including", "containing", or any variation thereof is intended to encompass non-exclusive inclusion, so that a process, method, article, or device including a series of elements includes not only those elements but also other elements not listed explicitly or those elements inherent to such a process, method, article, or device. Without more limitations, an element defined by the statement "including a..." shall not be precluded to include additional same elements present in a process, method, article or device including the element.

The methods and apparatuses provided by the examples of the present invention are described in detail above. Specific examples are used in this invention to illustrate the principle and the implementations of the present invention. The description of the above examples is only used to help understand the methods and its core idea of the present invention. Moreover, those skilled in the art can change both the specific implementations and the application scope according to the idea of the present invention. In summary, the content of this specification should not be construed as a limitation to the present invention.

## Claims

1. A capability obtaining method, performed by a multi-SIM
terminal, **characterized by** comprising
receiving (S101) configuration information from a first base station, wherein the configuration information is minimization of drive tests, MDT, configuration information and is indicated in a WirelessChargingList-r18 information element, IE;
receiving (S102), in a disconnected state, broadcast information of a second base station during an MDT process in accordance with the configuration information; and
determining (S103) capability information of the second base station for wireless charging according to the broadcast information, wherein the capability information of the second base station comprises capability information on solving a multi-subscriber identity module, multi-SIM, problem.

2. The method according to claim 1, wherein the capability information comprises at least one of:
a support for wireless charging;
a non-support for wireless charging; or
one or more wireless charging parameters;
wherein preferably, the one or more wireless charging parameters comprise at least one of:
a wireless charging power, a wireless charging frequency, or a wireless charging duration.

3. The method according to claim 2, further comprising at least one of:
saving (S301) the capability information that comprises the support for wireless charging; or
obtaining (S401) target capability information from the configuration information; and saving (S402) the capability information that matches the target capability information.

4. The method according to claim 3, further comprising:
sending (S501) the capability information to a third base station when the multi-SIM terminal establishes a connection with the third base station;
wherein preferably, sending the capability information to the third base station comprises:
sending (S601) first indication information to the third base station to indicate that the capability information is saved in the multi-SIM terminal; and
sending (S602) the capability information to the third base station when second indication information sent by the third base station is received.

5. A configuration sending method, performed by a first base station, **characterized by** comprising:
sending (S701) configuration information to a multi-SIM
terminal, wherein the configuration information is minimization of drive tests, MDT, configuration information and is indicated in a WirelessChargingList-r18 information element, IE, and the configuration information comprises a configuration for the multi-SIM
terminal in a disconnected state to receive broadcast information of a second base station in accordance with the configuration and determine capability information of the second base station for wireless charging according to the broadcast information, wherein the capability information of the second base station comprises capability information on solving a multi-subscriber identity module, multi-SIM, problem.

6. The method according to claim 5, wherein the configuration information further comprises target capability information for the multi-SIM terminal to save the capability information that matches the target capability information.

7. The method according to claim 5, wherein the capability information comprises at least one of:
a support for wireless charging;
a non-support for wireless charging; or
one or more wireless charging parameters;
wherein preferably, the one or more wireless charging parameters comprise at least one of:
a wireless charging power, a wireless charging frequency, or a wireless charging duration.

8. The method according to claim 7, further comprising:
obtaining (S801) the capability information from the multi-SIM terminal when a connection with the terminal is established;
wherein preferably, obtaining the capability information from the multi-SIM terminal
receiving (S901) first indication information sent by the multi-SIM terminal;
determining (S902), according to the first indication information, that the capability information is saved in the multi-SIM terminal;
sending (S903) second indication information to the multi-SIM terminal for instructing the terminal to send the capability information to the first base station.

9. The method according to claim 8, further comprising:
sending (S1001) the capability information to at least one of a core network or a network management system for configuring wireless charging capability of the second base station based on the capability information.

10. A capability receiving method, performed by at least one of a core network or a network management system, **characterized by** comprising:
receiving (S1101) capability information of a second base station for wireless charging sent by a third base station, wherein the capability information is obtained by a multi-SIM terminal from broadcast information of the second base station, and wherein the multi-SIM terminal in a disconnected state receives the broadcast information in accordance with configuration information sent by a first base station, wherein the capability information of the second base station comprises capability information on solving a multi-subscriber identity module, multi-SIM, problem, and wherein the configuration information is MDT configuration information and is indicated in a WirelessChargingList-r18 information element, IE.

11. The method according to claim 10, wherein the capability information comprises at least one of:
a support for wireless charging;
a non-support for wireless charging; or
one or more wireless charging parameters;
wherein preferably, the one or more wireless charging parameters comprise at least one of:
a wireless charging power, a wireless charging frequency, or a wireless charging duration.

12. The method according to claim 10, further comprising:
configuring wireless charging capability of the second base station based on the capability information.

13. The method according to claim 12, wherein configuring the wireless charging capability of the second base station based on the capability information comprises at least one of:
configuring the second base station to support wireless charging when determining according to the capability information that the second base station does not support wireless charging; or
adjusting the one or more wireless charging parameters that do not match standard charging parameters, wherein the capability information comprises one or more wireless charging parameters, and wherein one or more adjusted wireless charging parameters match the standard charging parameters.

14. A multi-SIM terminal, comprising:
one or more processors; and
one or more memories for storing a computer program;
wherein the computer program, when executed by the one or more processors, implements the capability obtaining method according to any one of claims 1 to 4.

15. A first base station, comprising:
one or more processors; and
one or more memories for storing a computer program;
wherein the computer program, when executed by the one or more processors, implements the configuration sending method according to any one of claims 5 to 9.

## Patentansprüche

1. Verfahren zum Erhalten von Fähigkeiten, das von einem Multi-SIM-Endgerät durchgeführt wird, **dadurch gekennzeichnet, dass** das Verfahren umfasst:
Empfangen (S101) von Konfigurationsinformationen von einer ersten Basisstation, wobei es sich bei den Konfigurationsinformationen um Minimization-of-Drive-Tests-, MDT, Konfigurationsinformationen handelt, die in einem WirelessChargingList-r18 Informationselement, IE, angezeigt werden;
Empfangen (S102), in einem getrennten Zustand, von Broadcast-Informationen einer zweiten Basisstation während eines MDT-Prozesses in Übereinstimmung mit den Konfigurationsinformationen; und
Bestimmen (S103) von Fähigkeitsinformationen der zweiten Basisstation zum drahtlosen Aufladen gemäß den Broadcast-Informationen, wobei die Fähigkeitsinformationen der zweiten Basisstation Fähigkeitsinformationen zum Lösen eines Multi-Subscriber-Identity-Module-, Multi-SIM, Problems umfassen.

2. Verfahren nach Anspruch 1, wobei die Fähigkeitsinformationen mindestens eines aus Folgendem aufweisen:
eine Unterstützung für kabelloses Laden;
eine Nichtunterstützung für kabelloses Laden; oder
einen oder mehrere Parameter für drahtloses Laden;
wobei vorzugsweise der eine oder die mehreren Parameter für drahtloses Laden mindestens eines aus Folgendem aufweisen:
eine Leistung für drahtloses Laden, eine Frequenz für drahtloses Laden oder eine Dauer für drahtloses Laden.

3. Verfahren nach Anspruch 2, das ferner mindestens eines aus Folgendem umfasst:
Speichern (S301) der Fähigkeitsinformationen, welche die Unterstützung für drahtloses Laden umfassen; oder
Erhalten (S401) von Zielfähigkeitsinformationen aus den Konfigurationsinformationen; und Speichern (S402) der Fähigkeitsinformationen, die mit den Zielfähigkeitsinformationen übereinstimmen.

4. Verfahren nach Anspruch 3, das ferner umfasst:
Senden (S501) der Fähigkeitsinformationen an eine dritte Basisstation, wenn das Multi-SIM-Endgerät eine Verbindung mit der dritten Basisstation herstellt; wobei vorzugsweise das Senden der Fähigkeitsinformationen an die dritte Basisstation umfasst:
Senden (S601) von ersten Anzeigeinformationen an die dritte Basisstation, um anzuzeigen, dass die Fähigkeitsinformationen in dem Multi-SIM-Endgerät gespeichert sind; und
Senden (S602) der Fähigkeitsinformation an die dritte Basisstation, wenn die von der dritten Basisstation gesendeten zweiten Anzeigeinformationen empfangen werden.

5. Verfahren zum Senden einer Konfiguration, das von einer ersten Basisstation durchgeführt wird, **dadurch gekennzeichnet, dass** das Verfahren umfasst:
Senden (S701) von Konfigurationsinformationen an ein Multi-SIM-Endgerät, wobei die Konfigurationsinformationen Minimization-of Drive-Tests-, MDT, Konfigurationsinformationen sind und in einem WirelessChargingList-r18 Informationselement, IE, angezeigt werden und die Konfigurationsinformationen eine Konfiguration für das Multi-SIM-Endgerät in einem getrennten Zustand umfassen, um Broadcast-Informationen einer zweiten Basisstation in Übereinstimmung mit der Konfiguration zu empfangen und Fähigkeitsinformationen der zweiten Basisstation zum drahtlosen Laden gemäß den Broadcast-Informationen zu bestimmen, wobei die Fähigkeitsinformationen der zweiten Basisstation Fähigkeitsinformationen zum Lösen eines Multi-Subscriber-Identity-Module-, Multi-SIM, Problems umfassen.

6. Verfahren nach Anspruch 5, wobei die Konfigurationsinformationen ferner Zielfähigkeitsinformationen für das Multi-SIM-Endgerät aufweisen, um die Fähigkeitsinformationen zu speichern, die mit den Zielfähigkeitsinformationen übereinstimmen.

7. Verfahren nach Anspruch 5, wobei die Fähigkeitsinformationen mindestens eines aus Folgendem aufweisen:
eine Unterstützung für kabelloses Laden;
eine Nichtunterstützung für kabelloses Laden; oder
einen oder mehrere Parameter für drahtloses Laden;
wobei vorzugsweise der eine oder die mehreren Parameter für drahtloses Laden mindestens eines aus Folgendem aufweisen:
eine Leistung für drahtloses Laden, eine Frequenz für drahtloses Laden oder eine Dauer für drahtloses Laden.

8. Verfahren nach Anspruch 7, das ferner umfasst:
Erhalten (S801) der Fähigkeitsinformationen von dem Multi-SIM-Endgerät, wenn eine Verbindung mit dem Endgerät hergestellt ist;
wobei vorzugsweise das Erhalten der Fähigkeitsinformationen von dem Multi-SIM-Endgerät umfasst:
Empfang (S901) von ersten Anzeigeinformationen, die von dem Endgerät gesendet werden;
Bestimmen (S902), gemäß den ersten Anzeigeinformationen, dass die Fähigkeitsinformationen in dem Multi-SIM-Endgerät gespeichert sind;
Senden (S903) von zweiten Anzeigeinformationen an das Endgerät, um das Multi-SIM-Endgerät anzuweisen, die Fähigkeitsinformationen an die erste Basisstation zu senden.

9. Verfahren nach Anspruch 8, das ferner umfasst:
Senden (S1001) der Fähigkeitsinformationen an mindestens eines aus einem Kernnetz oder einem Netzwerk-Management-System zum Konfigurieren der Fähigkeit zum drahtlosen Laden der zweiten Basisstation auf der Grundlage der Fähigkeitsinformationen.

10. Verfahren zum Empfangen von Fähigkeiten, das von mindestens einem Kernnetz oder einem Netzwerk-Management-System durchgeführt wird, **dadurch gekennzeichnet, dass** das Verfahren umfasst:
Empfangen (S1101) von Fähigkeitsinformationen einer zweiten Basisstation zum drahtlosen Laden, die von einer dritten Basisstation gesendet werden, wobei die Fähigkeitsinformationen von einem Multi-SIM-Endgerät aus Broadcast-Informationen der zweiten Basisstation erhalten werden, und wobei das Multi-SIM-Endgerät in einem getrennten Zustand die Broadcast-Informationen in Übereinstimmung mit Konfigurationsinformationen empfängt, die von einer ersten Basisstation gesendet werden, wobei die Fähigkeitsinformationen der zweiten Basisstation Fähigkeitsinformationen zum Lösen eines Multi-Subscriber-Identity-Module-, Multi-SIM, Problems umfassen, und wobei die Konfigurationsinformationen MDT-Konfigurationsinformationen sind und in einem WirelessChargingList-r18 Informationselement, IE, angezeigt werden.

11. Verfahren nach Anspruch 10, wobei die Fähigkeitsinformationen mindestens eines aus Folgendem aufweisen:
eine Unterstützung für kabelloses Laden;
eine Nichtunterstützung für kabelloses Laden; oder
einen oder mehrere Parameter für drahtloses Laden;
wobei vorzugsweise der eine oder die mehreren Parameter für drahtloses Laden mindestens eines aus Folgendem aufweisen:
eine Leistung für drahtloses Laden, eine Frequenz für drahtloses Laden oder eine Dauer für drahtloses Laden.

12. Verfahren nach Anspruch 10, das ferner umfasst:
Konfigurieren der Fähigkeit zum drahtlosen Laden der zweiten Basisstation basierend auf den Fähigkeitsinformationen.

13. Verfahren nach Anspruch 12, wobei das Konfigurieren der Fähigkeit zum drahtlosen Laden der zweiten Basisstation auf der Grundlage der Fähigkeitsinformationen mindestens eines aus Folgendem umfasst:
Konfigurieren der zweiten Basisstation, um drahtloses Laden zu unterstützen, wenn gemäß den Fähigkeitsinformationen festgestellt wird, dass die zweite Basisstation drahtloses Laden nicht unterstützt; oder
Anpassen des einen oder der mehreren Parameter für drahtloses Laden, die nicht mit den Standardladeparametern übereinstimmen, wobei die Fähigkeitsinformationen einen oder mehrere Parameter für drahtloses Laden umfassen, und wobei ein oder mehrere angepasste Parameter für drahtloses Laden mit den Standardladeparametern übereinstimmen.

14. Multi-Sim-Endgerät, das aufweist:
einen oder mehrere Prozessoren; und
einen oder mehrere Speicher zum Speichern eines Computerprogramms;
wobei das Computerprogramm, wenn es von dem einen oder den mehreren Prozessoren ausgeführt wird, das Verfahren zum Erhalten von Fähigkeiten nach einem der Ansprüche 1 bis 4 implementiert.

15. Erste Basisstation, die aufweist:
einen oder mehrere Prozessoren; und
einen oder mehrere Speicher zum Speichern eines Computerprogramms;
wobei das Computerprogramm, wenn es von dem einen oder den mehreren Prozessoren ausgeführt wird, das Verfahren zum Senden einer Konfiguration nach einem der Ansprüche 5 bis 9 implementiert.

## Revendications

1. Procédé d'obtention de capacité, mis en œuvre par un terminal multi-SIM, **caractérisé en ce qu'**il comprend les étapes consistant à :
recevoir (S101) des informations de configuration en provenance d'une première station de base, dans lequel les informations de configuration sont des informations de configuration de réduction au minimum de drive tests, dite MDT, et sont indiquées dans un élément d'information, dit IE, WirelessChargingList-r18 ;
recevoir (S102), dans un état déconnecté, des informations de diffusion d'une deuxième station de base pendant un processus de MDT conformément aux informations de configuration ; et
déterminer (S103) des informations de capacité de la deuxième station de base à des fins de charge sans fil conformément aux informations de diffusion, dans lequel les informations de capacité de la deuxième station de base comprennent des informations de capacité concernant la résolution d'un problème de multi-module d'identité d'abonné, dit multi-SIM.

2. Procédé selon la revendication 1, dans lequel les informations de capacité comprennent au moins les uns :
d'une prise en charge de charge sans fil ;
d'une non-prise en charge de charge sans fil ; ou
d'un ou de plusieurs paramètres de charge sans fil ;
dans lequel, de préférence, le ou les paramètres de charge sans fil comprennent au moins l'une :
d'une puissance de charge sans fil, d'une fréquence de charge sans fil, ou d'une durée de charge sans fil.

3. Procédé selon la revendication 2, comprenant en outre au moins l'une des étapes consistant à :
enregistrer (S301) les informations de capacité qui comprennent la prise en charge de charge sans fil ; ou
obtenir (S401) des informations de capacité cibles à partir des informations de configuration ; et
enregistrer (S402) les informations de capacité qui correspondent aux informations de capacité cibles.

4. Procédé selon la revendication 3, comprenant en outre l'étape consistant à :
envoyer (S501) les informations de capacité à une troisième station de base lorsque le terminal multi-SIM établit une connexion avec la troisième station de base ;
dans lequel, de préférence, l'étape d'envoi des informations de capacité à la troisième station de base comprend les étapes consistant à :
envoyer (S601) des premières informations d'indication à la troisième station de base pour indiquer que les informations de capacité ont été enregistrées dans le terminal multi-SIM ; et
envoyer (S602) les informations de capacité à la troisième station de base lors de la réception de secondes informations d'indication envoyées par la troisième station de base.

5. Procédé d'envoi de configuration, mis en œuvre par une première station de base, **caractérisé en ce qu'**il comprend les étapes consistant à :
envoyer (S701) des informations de configuration à un terminal multi-SIM, dans lequel les informations de configuration sont des informations de configuration de réduction au minimum de drive tests, dite MDT, et sont indiquées dans un élément d'information, dit IE, WirelessChargingList-r18, et les informations de configuration comprennent une configuration permettant au terminal multi-SIM, dans un état déconnecté, de recevoir des informations de diffusion d'une deuxième station de base conformément à la configuration et de déterminer des informations de capacité de la deuxième station de base à des fins de charge sans fil conformément aux informations de diffusion, dans lequel les informations de capacité de la deuxième station de base comprennent des informations de capacité concernant la résolution d'un problème de multi-module d'identité d'abonné, dit multi-SIM.

6. Procédé selon la revendication 5, dans lequel les informations de configuration comprennent en outre des informations de capacité cibles permettant au terminal multi-SIM d'enregistrer les informations de capacité qui correspondent aux informations de capacité cibles.

7. Procédé selon la revendication 5, dans lequel les informations de capacité comprennent au moins les uns :
d'une prise en charge de charge sans fil ;
d'une non-prise en charge de charge sans fil ; ou
d'un ou de plusieurs paramètres de charge sans fil ;
dans lequel, de préférence, le ou les paramètres de charge sans fil comprennent au moins l'une :
d'une puissance de charge sans fil, d'une fréquence de charge sans fil, ou d'une durée de charge sans fil.

8. Procédé selon la revendication 7, comprenant en outre l'étape consistant à :
obtenir (S801) les informations de capacité à partir du terminal multi-SIM lorsqu'une connexion avec le terminal est établie ;
dans lequel, de préférence, l'étape d'obtention des informations de capacité à partir du terminal multi-SIM comprend les étapes consistant à :
recevoir (S901) des premières informations d'indication envoyées par le terminal multi-SIM ;
déterminer (S902), conformément aux premières informations d'indication, que les informations de capacité ont été enregistrées dans le terminal multi-SIM ;
envoyer (S903) des secondes informations d'indication au terminal multi-SIM pour ordonner au terminal d'envoyer les informations de capacité à la première station de base.

9. Procédé selon la revendication 8, comprenant en outre l'étape consistant à :
envoyer (S1001) les informations de capacité à au moins l'un d'un réseau central ou d'un système de gestion de réseau pour configurer une capacité de charge sans fil de la deuxième station de base sur la base des informations de capacité.

10. Procédé de réception de capacité, mis en œuvre par au moins l'un d'un réseau central ou d'un système de gestion de réseau, **caractérisé en ce qu'**il comprend les étapes consistant à :
recevoir (S1101) des informations de capacité d'une deuxième station de base à des fins de charge sans fil envoyées par une troisième station de base, dans lequel les informations de capacité sont obtenues par un terminal multi-SIM à partir d'informations de diffusion de la deuxième station de base, et dans lequel le terminal multi-SIM, dans un état déconnecté, reçoit les informations de diffusion conformément aux informations de configuration envoyées par une première station de base, dans lequel les informations de capacité de la deuxième station de base comprennent des informations de capacité concernant la résolution d'un problème de multi-module d'identité d'abonné, dit multi-SIM, et dans lequel les informations de configuration sont des informations de configuration de MDT et sont indiquées dans un élément d'information, dit IE, WirelessChargingList-r18.

11. Procédé selon la revendication 10, dans lequel les informations de capacité comprennent au moins les uns :
d'une prise en charge de charge sans fil ;
d'une non-prise en charge de charge sans fil ; ou
d'un ou de plusieurs paramètres de charge sans fil ;
dans lequel, de préférence, le ou les paramètres de charge sans fil comprennent au moins l'une :
d'une puissance de charge sans fil, d'une fréquence de charge sans fil, ou d'une durée de charge sans fil.

12. Procédé selon la revendication 10, comprenant en outre l'étape consistant à :
configurer une capacité de charge sans fil de la deuxième station de base sur la base des informations de capacité.

13. Procédé selon la revendication 12, dans lequel l'étape de configuration de la capacité de charge sans fil de la deuxième station de base sur la base des informations de capacité comprend au moins l'une des étapes consistant à :
configurer la deuxième station de base pour qu'elle prenne en charge une charge sans fil lors de la détermination, conformément aux informations de capacité, du fait que la deuxième station de base ne prend pas en charge une charge sans fil ; ou
régler le ou les paramètres de charge sans fil qui ne correspondent pas à des paramètres de charge standard, dans lequel les informations de capacité comprennent un ou plusieurs paramètres de charge sans fil, et dans lequel un ou plusieurs paramètres de charge sans fil réglés correspondent aux paramètres de charge standard.

14. Terminal multi-SIM, comprenant :
un ou plusieurs processeurs ; et
une ou plusieurs mémoires destinées à maintenir un programme d'ordinateur ;
dans lequel le programme d'ordinateur, lorsqu'il est exécuté par le ou les processeurs, met en œuvre le procédé d'obtention de capacité selon l'une quelconque des revendications 1 à 4.

15. Première station de base, comprenant :
un ou plusieurs processeurs ; et
une ou plusieurs mémoires destinées à maintenir un programme d'ordinateur ;
dans lequel le programme d'ordinateur, lorsqu'il est exécuté par le ou les processeurs, met en œuvre le procédé d'envoi de configuration selon l'une quelconque des revendications 5 à 9.
